# EUROPEAN PATENT APPLICATION

(11) **EP 1 865 591 A2**
(43) Date of publication of application: **12.12.2007**
(21) Application number: 07011275.0
(22) Date of filing: 08.06.2007
(51) Int. Cl.: H02M 3/156, H02M 1/10, H02M 3/335

(54) **USB charger for commercial transport vehicle**

(30) Priority: 08.06.2006 US 811884 P; 25.05.2007 US 807040
(71) Applicant: Astronics Advanced Electronic Systems Corp., Redmond, WA 98052-2540 (US)
(72) Inventor: Brown, Douglas D., Renton, Washington 98055 (US); Markert, Dennis P., Maple Valley, Washington 98038 (US); Jouper, Jeffrey A., Renton, King, Washington 98059 (US); Lamb, John S., Snohomish, Washington 98021 (US)
(74) Representative: Klunker . Schmitt-Nilson . Hirsch

(57) **Abstract**

An outlet (18) provides both AC and DC power to at least one device. The outlet includes an input portion (16) adapted to receive a first voltage input and a second voltage input (22) wherein the first voltage input is a variable DC voltage and the second input is AC of a desired voltage and frequency. A converter reduces the first input voltage to a constant DC voltage output effective to power a PED. The outlet has a first receptacle (20) in the form of a USB port to deliver the DC power to the device and a second receptacle (24) to deliver the AC power to the device. A sensing circuit is coupled to the outlet and determines if a source of the second voltage may safely provide the AC power. An enabling mechanism individually activates the second receptacle dependent on the determination of the sensing circuit and first and second indicators identify to a user if the first receptacle and/or the second receptacle is activated.

## Description

### CROSS REFERENCE TO RELATED APPLICATION(S)

This application claims priority to U.S. Provisional Patent Application No. 60/811,884, entitled "USB Charger for Commercial Transport Vehicle" filed on June 8, 2006, which is incorporated by reference in its entirety.

### BACKGROUND

Field

The disclosed subject matter relates to a power supply unit for passengers on a commercial transport vehicle, and more particularly to a power supply unit for providing direct current (DC) power for a portable electronic device (PED).

Description of the Related Art

Many passengers traveling by commercial transport vehicle, such as airplane, bus, or train, have a PED for music or other entertainment that relies on batteries for power. Such PEDs include, without limitation, iPod music players manufactured by Apple, MP3 players, and various hand-held video games. During long excursions, the batteries typically do not have the capacity to power the PED for the entire trip. While the passenger may carry extra batteries, such a solution is not ideal as the extra batteries mean that the passenger is carrying extra weight, the passenger may dispose of used batteries as litter or in an environmentally unsafe manner, or the passenger may forget to bring sufficient batteries to last for the entire excursion.

Some commercial transport vehicles have 110 volt alternating current (AC) power available for passenger use. However, the passenger must carry an adapter to convert AC to DC power for their PED. The AC adapter adds weight to the materials carried by the passenger and may be forgotten by the passenger when packing or disembarking.

U.S. Patent No. 5,754,445 to Jouper, et al. discloses a power supply management system for providing power to individual passengers in a commercial transport vehicle having a limited source of power, such as a commercial aircraft. The system measures the amount of power drawn by the outlets. Outlets are enabled if the amount of measured power is less than a maximum amount of power available. Additional outlets not currently in use are disabled if the amount of measured power is greater than the maximum amount of power available. U.S. Patent No. 5,754,445 is incorporated by reference in its entirety herein.

U.S. Patent Application Publication No. US 2004/0246341 A1 discloses an apparatus for charging a battery of a PED connected to a computer by a universal serial bus (USB) by receiving power from the computer through the USB. While convenient for use at home, such a system is not ideal in the cramped passenger compartment of a commercial transport vehicle where there may not be room for both a computer and a digital camera. U.S. Patent Application Publication No. US 2004/0246341 A1 is incorporated by reference in its entirety herein.

There remains a need for a system to provide power to an individual passenger's PED that does not require the passenger to carry additional equipment, such as an AC adapter or personal computer, and that does not suffer from the disadvantages of the prior art.

### BRIEF SUMMARY

The details of one or more embodiments of the disclosed subject matter are set forth in the accompanying drawings and the description below. Other features, objects and advantages of the subject matter will be apparent from the description and drawings, and from the claims.

In one embodiment, there is claimed a direct current (DC) power converter that includes an input portion adapted to receive a variable input DC voltage; a converter that reduces the variable input voltage to a constant DC voltage output effective to power a portable electronic device (PED); and an output portion coupled to a universal serial bus (USB) receptacle.

Another embodiment of the subject matter is directed to an outlet for providing direct current (DC) to at least one device. The outlet includes an input portion adapted to receive a variable DC; a converter that reduces the variable DC voltage to a constant DC voltage output effective to power a portable electronic device (PED); and an outlet having a receptacle in the form of a universal serial bus (USB) port to deliver the constant DC to the PED.

Another embodiment of the subject matter is directed to an outlet for providing both alternating current (AC) and direct current (DC) to at least one device. The outlet includes an input portion adapted to receive a first voltage input and a second voltage input wherein the first voltage input is a variable DC voltage and the second input is AC of a desired voltage and frequency; a converter that reduces the first input voltage to a constant DC voltage output effective to power a portable electronic device (PED); and an outlet having a first receptacle in the form of a universal serial bus (USB) port to deliver said constant DC to a device and a second receptacle to deliver the AC to a device.

### BRIEF DESCRIPTION OF THE DRAWINGS

FIG. 1 is a schematic illustrating the power outlet described herein.

FIG. 2 is a schematic illustrating a DC converter for use with the disclosed power outlet.

FIG. 3 is a schematic illustrating an alternative DC converter for use with the disclosed power outlet.

FIG. 4 is a schematic illustrating a first system architecture for the power outlet described herein.

FIG. 5 is a schematic illustrating a second system architecture for the power outlet described herein.

### DETAILED DESCRIPTION

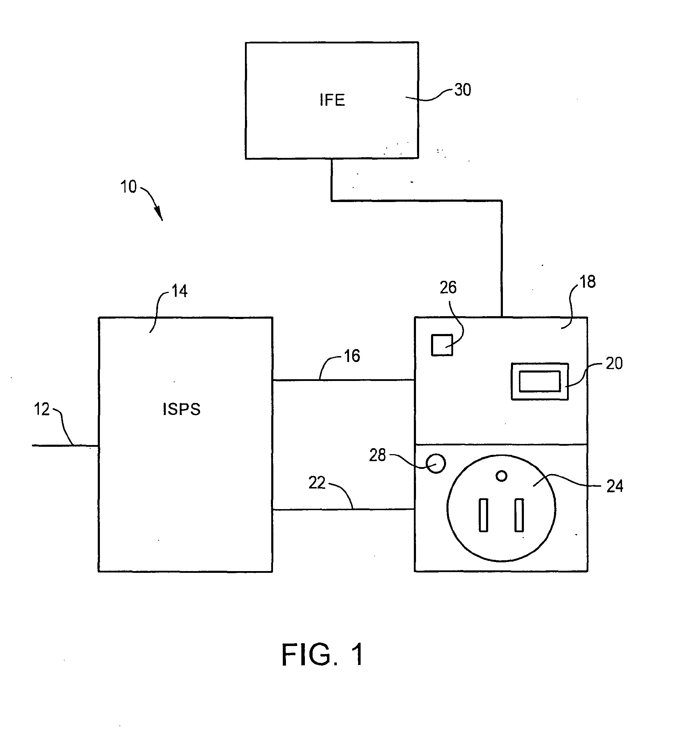

Figure 1 schematically illustrates a system 10 for providing electrical power to a passenger on a commercial transport vehicle. Such a commercial transport vehicle includes without limitation, buses, trains and passenger aircraft. Vehicle power 12 is typically provided from a generator actuated by the power propulsion system of the commercial transport vehicle. For example, the generator may be attached to the rotating turbine of a commercial jet aircraft engine and vehicle power 12 may be 110 volts AC at a cycle rate of between 360 Hz and 800 Hz. Vehicle power 12 is provided to an in-seat power supply (ISPS) 14 that is typically mounted under one of the seats in a row of seats on the commercial transport vehicle or mounted under the central aisle adjacent to a row of such seats. The in-seat power supply 14 includes circuitry to convert vehicle power 12 to a DC input voltage 16 that is typically variable between 10 volts DC and 60 volts DC.

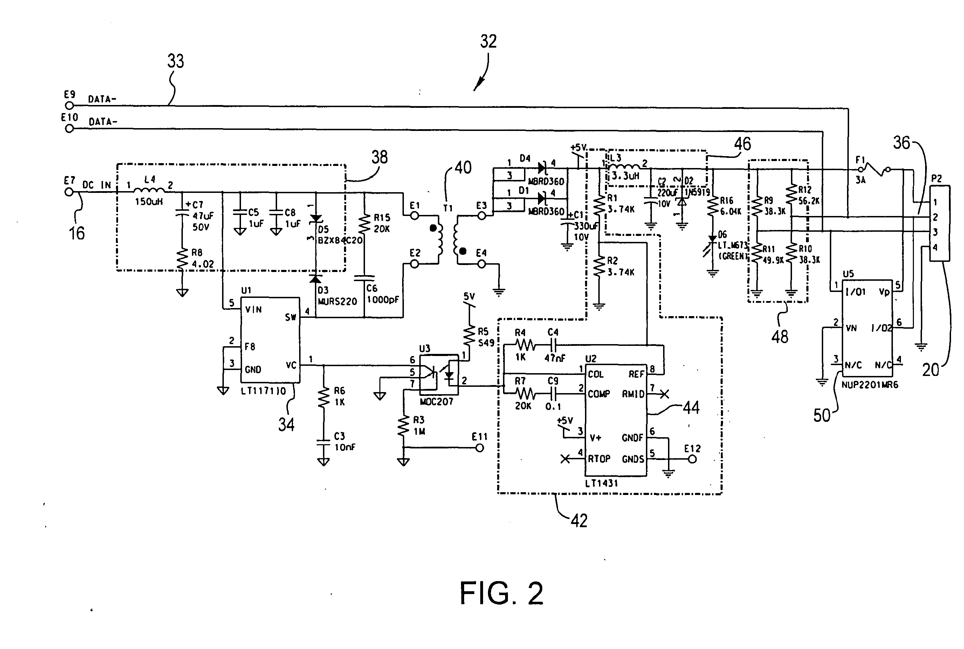

DC input voltage 16 is provided to an outlet 18 that includes a DC power converter, illustrated in Figure 2 and described hereinbelow, that converts the variable DC input voltage to a constant DC voltage output. The DC voltage output is nominally 5 volts DC, with a variation of not more than 5%. The output voltage is provided to a first receptacle 20 adapted to provide power to a PED.

Typically, the first receptacle 20 will be in the form of a USB and most preferably be a USB Type A receptacle. By Type A, it is meant the USB receptacle has a flat rectangular form factor and is designed to accept a USB Type A male plug. This receptacle is sometimes referred to as an "upstream" connector.

The system 10 enables a passenger to connect their PED to the USB Type A port in the passenger seat or frame of the vehicle and use the vehicle's electrical system to supply power to their PED. The connection can either power the device directly for use or charge the device's battery. Typically the outlet will be built into the arm of the vehicle's seat. However, it may be placed in other locations in a commercial transport vehicle and is not limited to the seat.

The in-seat power supply 14 may also provide a second voltage input 22 to the outlet 18. The second input voltage 22 is AC of a desired voltage and frequency. For example, if the majority of passengers are residents of the United States, the second voltage input may be 110 volts AC at 60 Hz. The second voltage input 22 is provided to a second receptacle 24 for the delivery of AC power to a device.

Frequently, the vehicle power 12 is limited. Power management is provided for the second receptacle 24. As described in U.S. Patent No. 5,754,445, a sensing circuit is coupled to the second receptacle 24 to determine if the vehicle power 12 is sufficient to safely provide 110 volt, 60 Hz AC power to the second receptacle 24. If sufficient power is available, the outlets are enabled and power provided. The enabling mechanism is such that while the first receptacle 20 is always activated, the second receptacle 24 is individually activated only when sufficient power is available. It is within the scope of the system 10 for one of the two receptacles only to be enabled.

A first indicator 26 identifies when direct current is available at the first receptacle 20. Typically, indication is by an illuminated panel. A second indicator 28 indicates when AC power is available through the second receptacle 24. Backlight illumination may be provided to identify the location of the first receptacle 20 and second receptacle 24 so that the passenger may plug a PED into the respective receptacle without the need to utilize external lighting.

In a preferred embodiment, the first receptacle 20 provides proper biasing for an iPod or other Apple Computer, Inc. (Cupertino, CA) devices.

The USB Type A receptacle is a 4-pin connector. Two pins are used to provide the DC voltage. The remaining pins may be used to provide data, such as from an in-flight entertainment system (IFE) 30. The in-flight entertainment system 30 may provide any desired data to the first receptacle 20, such as movies, e-mail, internet access, and a map indicating the vehicle's location relative to the starting point and final destination.

Figure 2 schematically illustrates a DC converter 32 contained within the outlet (18 of Figure 1). DC converter 32 is typically a flyback converter that receives DC input voltage 16 from in-seat power supply 14 and data 33 from another source, such as in-flight entertainment system 30.

DC input voltage 16 can fluctuate between 10 and 60 volts. A control chip 34 in combination with the remaining circuit components generates a desired output voltage 36. The combination of circuit components depicted in FIG. 2 is one example of circuitry that can be used in combination with the other components of the disclosed subject matter.

As shown in FIG. 2, the circuitry includes, *inter alia,* a control chip 34, an input EMI filter 38, a flyback transformer 40, and a feedback network 42. Feedback network 42 includes a feedback reference chip 44, which compares output voltage 36 to the output voltage requirements stored on reference chip 44. DC converter 32 of FIG. 2 also includes an outlet EMI filter 46 and a pre-biasing system 48, which may be necessary when output voltage 36 is used for an iPod, or other PED devices. The pre-biasing signals to the iPod, or other PED device, that power is available to the outlet unit and the iPod can draw power and charge. DC converter 32 of FIG. 2 also includes a protection device 50 that goes across the two data lines.

As noted above, output voltage 36 is provided via two pins of a Type A USB connector. The remaining pins are available for the transfer of data, such as from the in-flight entertainment system. If the output voltage 36 is to provide power to a single USB connector, then the output current is 0.5 amps and a suitable control chip 34 is an LT1171 flyback converter switching at 100KHz.

If the output voltage 36 is to provide power to a row of seats, typically three seats, then the output current is (0.5 amps) x (number of seats), typically 1.5 amps. A 5.0 volt/1.5 amp output may be obtained by replacing the control chip 34 with one effective to increase output to 1.5 amps such as an LT1170 flyback converter.

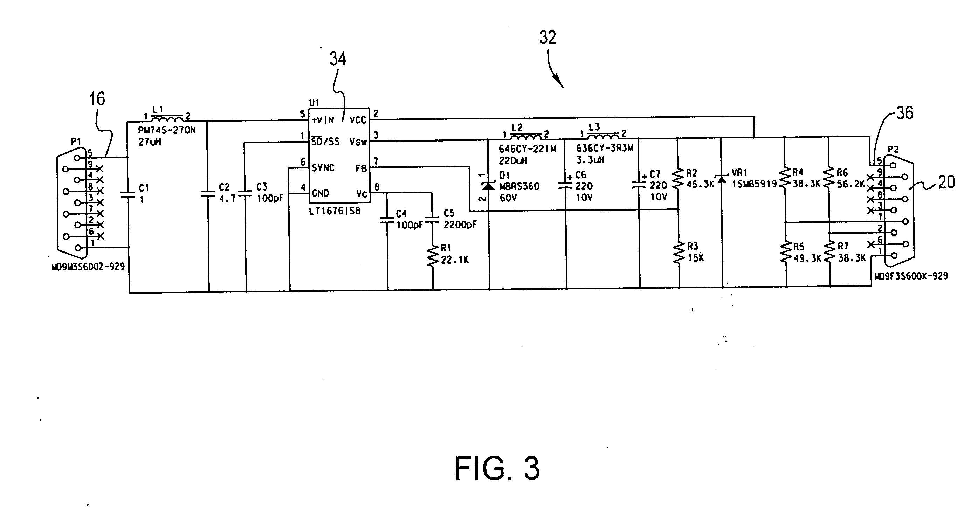

Another embodiment of DC converter 32 is illustrated in FIG. 3. This embodiment contains less circuitry than the DC converter disclosed in FIG.2 and does not contain, *inter alia,* a pre-biasing system 48 and a protection device 50.

FIG. 3 schematically illustrates DC converter 32 contained within the outlet (18 of Figure 1). DC input voltage 16 fluctuates between 10 and 60 volts. A control chip 34 in combination with the remaining circuit components generates a desired output voltage 36. As noted above, output voltage 36 is provided via two pins of a Type A USB connector. The remaining pins are available for the transfer of data, such as from the in-flight entertainment system. If the output voltage 36 is to provide power to a single USB connector, then the output current is 0.5 amps (+/- 5%) and a suitable control chip 34 is an LT1676 buck converter switching at 100KHz.

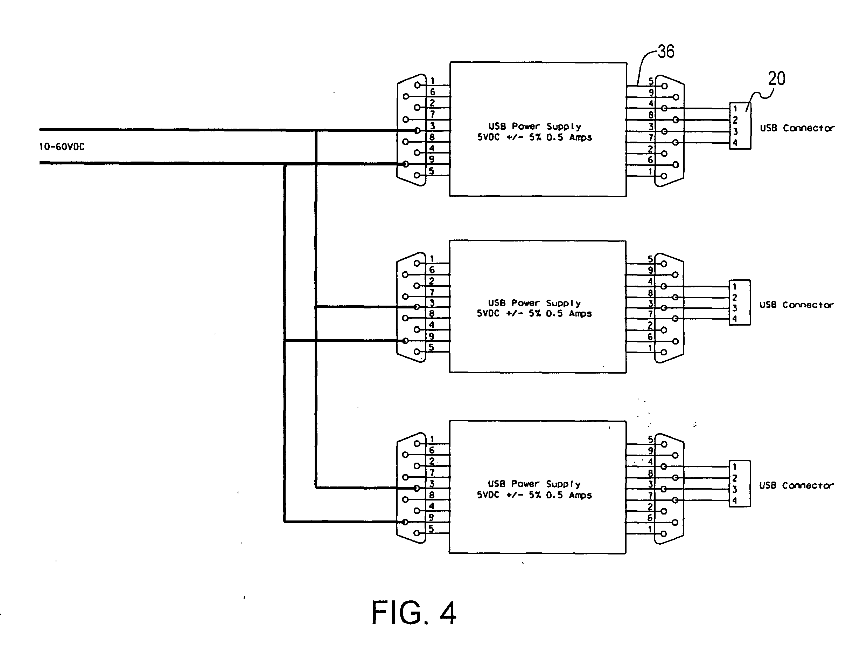

Figure 4 illustrates an embodiment of the invention where the output voltage 36 powers a single USB connector and is at 5 volts DC +/- 5%, 0.5 amps.

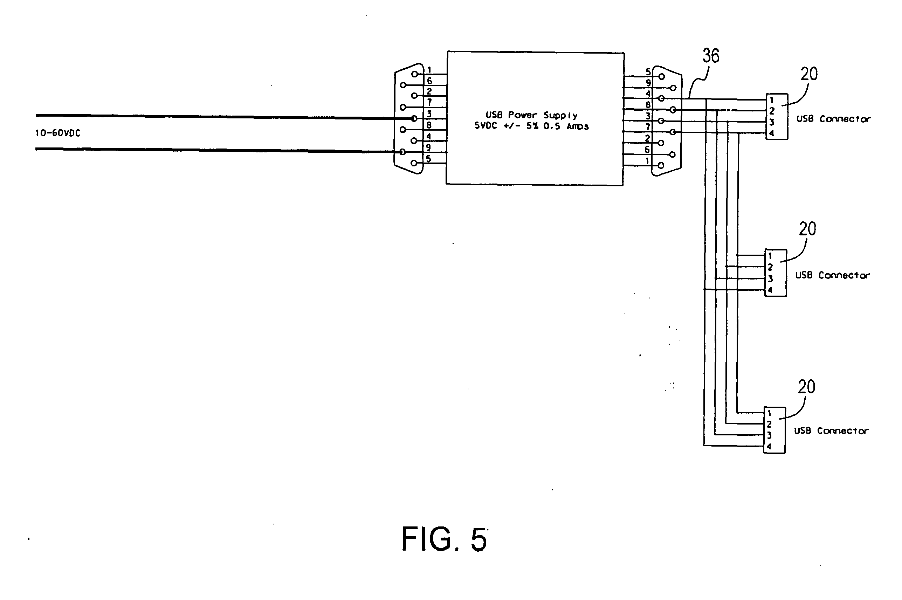

Figure 5 illustrates an embodiment in which output voltage 36 provides power to a series of three USB connectors 20 and the output voltage 36 is 5 volts DC +/- 5% at 1.5 amps. Parallel output circuitry 30 delivers 0.5 amps to each of the three USB connectors 20.

One or more embodiments of the disclosed subject matter have been described. Nevertheless, it will be understood that various modifications may be made without departing from the spirit and scope of the disclosed subject matter. Accordingly, other embodiments are within the scope of the following claims.

## Claims

1. A direct current (DC) power converter comprising:
an input portion adapted to receive a variable input DC voltage;
a converter that reduces said variable input voltage to a constant DC voltage output effective to power a portable electronic device (PED); and
an output portion coupled to a universal serial bus (USB) receptacle.

2. The DC power converter of claim 1 wherein said input voltage is between 10 volts DC and 60 volts DC.

3. The DC power converter of claim 1 or 2 wherein said output voltage is 5 volts ± a maximum of 5%

4. The DC power converter of any of claims 1 to 3 wherein an output current is nominally 0.5 amp.

5. The DC power converter of any of claims 1 to 3 wherein an output current is nominally 1.5 amp.

6. The DC power converter of any of claims 1 to 5, including a prebiasing system.

7. The DC power converter of any of claims 1 to 6, further including:
a control chip; and
feedback network comprising a feedback reference chip, wherein said feedback reference chip compares said DC voltage output to a DC voltage output stored on said feedback reference chip.

8. An outlet for providing direct current (DC) to at least one device, comprising:
an input portion adapted to receive a variable DC;
a converter that reduces said variable DC voltage to a constant DC voltage output effective to power a portable electronic device (PED); and
an outlet having a receptacle in the form of a universal serial bus (USB) port to deliver said constant DC to said PED.

9. The outlet of claim 8 wherein said USB port further delivers data to said PED.

10. The outlet of claim 8 or 9 further including an indicator to identify to a user if said receptacle is activated.

11. An outlet for providing both alternating current (AC) and direct current (DC) to at least one device, comprising:
an input portion adapted to receive a first voltage input and a second voltage input wherein said first voltage input is a variable DC voltage and said second input is AC of a desired voltage and frequency;
a converter that reduces said first input voltage to a constant DC voltage output effective to power a portable electronic device (PED); and
a first receptacle in the form of a universal serial bus (USB) port to deliver said constant DC to a device and a second receptacle to deliver said AC to a device.

12. The outlet of claim 11 wherein said first voltage input is between 10 volts DC and 60 volts DC.

13. The outlet of claim 11 or 12 wherein said constant DC voltage output is 5 volts ± a maximum of 5%.

14. The outlet of any of claims 11 to 13 wherein an output current is nominally 0.5 amp.

15. The outlet of any of claims 11 to 13 wherein an output current is nominally 1.5 amp.

16. The outlet of any of claims 11 to 15 wherein said USB port further delivers data to said PED.

17. The outlet of any of claims 11 to 16 wherein a sensing circuit coupled to said outlet determines if a source of said second voltage input may safely provide said AC;
an enabling mechanism to individually activate said second receptacle dependent on the determination of said sensing circuit; and
a first indicator and a second indicator to identify to a user if said first receptacle and / or said second receptacle is activated.

18. The outlet of any of claims 11 to 17 wherein said first receptacle and said second receptacle are back lit.
